Europäisches Patentamt

European Patent Office

Office européen des brevets

(19)

(11) Publication number: **0 083 090**
**B1**

(12) **EUROPEAN PATENT SPECIFICATION**

(45) Date of publication of patent specification: **09.09.87**

(51) Int. Cl.⁴: **H 04 N 9/31**

(21) Application number: **82111976.5**

(22) Date of filing: **23.12.82**

(54) **High efficiency optical system for three-color liquid crystal light valve image projection with color selective prepolarization.**

(30) Priority: **28.12.81 US 334682**
**28.12.81 US 334680**

(43) Date of publication of application:
**06.07.83 Bulletin 83/27**

(45) Publication of the grant of the patent:
**09.09.87 Bulletin 87/37**

(84) Designated Contracting States:
**CH DE FR GB IT LI SE**

(56) References cited:
**US-A-4 127 322**
**US-A-4 191 456**

(73) Proprietor: **Hughes Aircraft Company**
**7200 Hughes Terrace P.O. Box 45066**
**Los Angeles California 90045-0066 (US)**

(72) Inventor: **Gagnon, Ralph J.**
**909 Sequoyah**
**Chico California 95926 (US)**
Inventor: **Carson, Robert T.**
**2001 N.Yucca Avenue**
**Fullerton California 92635 (US)**

(74) Representative: **Kuhnen, Wacker & Partner**
**Schneggstrasse 3-5 Postfach 1729**
**D-8050 Freising (DE)**

Courier Press, Leamington Spa, England.

## Description

The invention relates to a three-color image projection system comprising a high intensity lamp for providing light energy; a system of dichroic separators and prepolarizing beam splitters for splitting and prepolarizing the light emitted from said lamp into beams of different color and polarization states; reflecting light valves for selectively modulating the polarization state of each of said light beams; and means for combining the modulated light beams into a single output beam.

Such an image projection system is disclosed in US—A—4,191,456. In this known system, the light provided by the high intensity lamp first passes a prepolarizing prism so that a first light beam is produced which is still white, but has a predetermined polarization. This light beam is split by two dichroic separators into three beams which are of different color but still have polarization of the first beam. Each of the three beams of different color is directed to a polarizing beam splitter which passes the light having the predetermined polarization to a reflecting light valve, which selectively modulates the polarization state in response to information applied thereto. The light having the modulated polarization state is reflected to the polarizing beam splitter which passes the portion of the light beam which has a polarization different from the predetermined polarization, to an arrangement of dichroic filters which combine the three beams of different color into a single output beam.

The quality of the projected image is generally a function of brightness, resolution and contrast. Image quality can generally be improved by placing a prepolarizing prism in the optical path in front of the main polarizing prism. The known system includes such a prepolarizing prism between the light source and the system of dichroic separators. Resolution and contrast does, however, not only depend on the modulation performance of the light valves, but to a high degree also on the precision with which the beams of different color are recombined to the single output beam. This recombination makes necessary an exact point by point coverage of the different beams at the combining means and a perfect parallelism of the different components of the output beam. The necessary optical adjustments are the more difficult the more components the separated beams of different color have to pass.

It is the object of the invention to provide a system which may be easily adjusted in order to provide a projected image of enhanced resolution and contrast.

In a first embodiment of the invention, the system of dichroic separators and prepolarizing beam splitters consists of a first color selective polarizing beam splitter for splitting light from said source into first and second beams, said first beam consisting essentially of a first color and a first polarization state and said second beam consisting of second and third colors having the first polarization state and the first, second and third colors having the second polarization state; a second color selective polarizing beam splitter for splitting said second beam into third and fourth beams, said third beam consisting essentially of light of the first polarization state and said fourth beam consisting essentially of light of the second and third colors and the second polarization state; a first dichroic separator for filtering said third beam, extracting said first color component and directing it to said first light valve; and a second dichroic separator for filtering said fourth beam and directing said second color component to said second light valve and directing said third color component to said third light valve, whereby first, second, and third substantially monochromatic polarization modulated beams are returned from said light valves and said first and second dichroic separators, respectively, to said second beam splitter which concurrently is the means for combining the modulated beams into the single output beam.

In a second embodiment of the invention, which allows a certain separation of the color-components in order to achieve special effects, the system of dichroic separators and prepolarizing beam splitters consists of a first beam splitter for splitting incident light from said source into first and second beams, said first beam having a first color component and said second beam having second and third color components, respectively; a second beam splitter mounted in optical alignment with said first beam splitter for directing light of said first color to a first light valve and modulated light from said first light valve to a first projection lens; a third beam splitter in optical alignment with said first beam splitter for splitting said second beam into third and fourth beams having first and second polarization states, respectively; a first dichroic filter for transmitting light of the second color in the third beam to provide an output beam having the second color and the first polarization state; a second dichroic filter for transmitting light of the third color in the fourth beam to provide an output beam having the second polarization state and the third color; a beam combiner for combining the outputs of said first and second dichroic filters into a fifth beam; and a fourth beam splitter for directing light in the fifth beam of the first polarization state to a second light valve, light of the second polarization state to a third light valve and modulated light from said second and third light valves to a second projection lens.

In the known image projection system, the system of dichroic separators and prepolarizing beam splitters is comprised of eight such elements, not to mention a plurality of mirrors and additional trim filters. In contrast thereto, in the embodiments of the invention the system of dichroic separators and prepolarizing beam splitters consists of only four and five elements, respectively. It is evident, that this reduced number of elements may be adjusted with high accuracy much easier than the known system. In addition, the light beams may be relayed through the reduced number of elements by a reduced number of mirrors, so that also in this respect the systems according to the invention are appreciably simplified.

Further, since the quality of the projected image depends on a correct optical adjustment of all components of the system, it is important that the system is able to resist against all effects which could disturb the selected adjustments. Therefore, it is desirable to design such a system with a very high mechanical stability to guarantee that the high resolution and contrast provided by the initial adjustment is preserved even under hard conditions over extended time periods. It is evident that reducing the number of elements to be held in a defined position improves the reliability of such systems. The reduced number of the embodiments of the invention especially allows to encase the system of dichroic separators and prepolarizing beam splitters and also said combining means into a common oil-filled housing of unitary construction.

Evidently, a three-color image protection system which has its main elements encased in a common oil-filled housing has a very high mechanical stability because of its unitary structure. The advantage of such a unitary structure is also achieved when the optical system of the three-color image projection system is different from the enclosed embodiments, although the combination of said systems having a reduced number of elements and the encasing of these elements in a common oil-filled housing results in a most efficient structure. A similar two-color projection system is the subject matter of copending patent application no. 82111968.2.

The various features and advantages of the present invention may be more readily understood with reference to the following detailed description taken in conjunction with accompanying drawings, in which:

Figure 1 is a perspective view of a diagrammatic representation of the preferred embodiment of the present invention.

Figure 2 is a perspective view of a diagrammatic representation of a second embodiment of the invention.

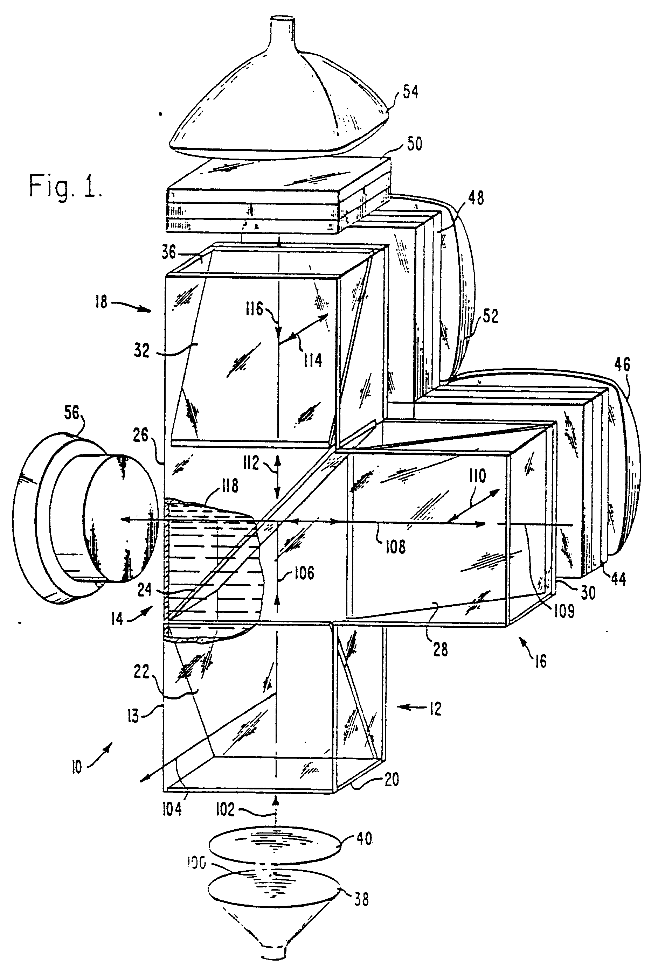

As shown in figure 1, the preferred embodiment of the invention 10 is a unitary glass structure. It is constructed to contain optical grade oil. However, it may be made of solid glass or other suitably transparent material.

As shown in the figure, the invention includes four cubic sections 12, 14, 16 and 18. The lower section 12 includes a planar lower surface 20 which provides an input aperture. While it is not critical to this invention, it is understood that an ultraviolet filter may be coated on surface 20 if desired.

A first color selective polarizing beam splitter 22 is also mounted in the lower section 12 at a 45° angle relative to the surface 20. The beam splitter 22 provides color selective prepolarization. It is constructed of glass or other suitably transparent material. It has an optical thin film coating which is effective to polarize the green light only, reflecting the S and transmitting the P, while transmitting the S and P components of the red and blue light. The coating includes fifteen sets of layers each set having a first layer .731 quarter wavelength in depth with an index of refraction of 1.6, a second layer 1.313 quarter wavelengths in depth with an index of refraction of 1.8 and a third layer .731 quarter wavelength in depth with an index of refraction 1.6. These layers are constructed at an optical thickness $\lambda$ equal to 550 nanometers for incidence at 0°. With this coating, the first polarizing beam splitter 22 is a green prepolarizer. In the preferred embodiment, the green prepolarizer is coated for optimum performance in oil with an index of refraction of 1.65.

A second color selective polarizing beam splitter 24 is mounted in the second section 14. It serves as the main prism. Like the first prepolarizer 22, the second polarizer 24 is mounted at a 45° angle relative to incident light. Note, however, that its transverse axis is normal or perpendicular to that of the first beam splitter 22. Thus, light which is S polarized as to the first beam splitter 22 is P polarized as to the second beam splitter 24. Similarly, light which is P polarized as to the first beam splitter 22 is S polarized as to the second beam splitter 24.

The beam splitter 24 is designed to reflect S polarized light and transmit P polarized light. It has an optical thin film coating which is designed for performance in oil having an index of refraction of 1.65. The thin film coating includes a first layer 1.557 quarter wavelengths in depth with an index of refraction of 2.05. Five sets of layers are coated on this first layer. Each set includes a first layer .994 quarter wavelength in depth with an index of refraction 1.35, a second layer 1.157 quarter wavelengths in depth with an index of refraction of 2.32 and a third layer .994 quarter wavelength in depth with an index of refraction of 1.35. Over these five sets of layers are provided a final layer 1.557 quarter wavelengths in depth with an index of refraction 2.05. This construction is at an optical thickness $\lambda$ equal to 500 nanometers at an incident angle of 0°. In general, the coatings are provided on glass or other suitably transparent material having a thickness designed to meet specific application. In the preferred embodiment, the thickness of the glass is between one eighth and one quarter of an inch.

The third section 16 includes a first dichroic separator or filter 28 for reflecting green light while transmitting red and blue. This first dichroic separator 28 is mounted so that light is incident from the second beam splitter 24 at a 45° angle. It is designed for operation in oil having an index of refraction of 1.65. It is coated with a thin film coating including 15 sets of layers each set having a first layer .731 quarter wavelength in depth and having an index of refraction of 1.6, a second layer 1.157 quarter wavelengths in depth and having an index of refraction 2.32 and a third layer

.731 quarter wavelength in depth and having an index of refraction of 1.6. These sets of layers are coated with 15 sets of layers each set having a first layer of thickness .760 quarter wavelength in depth with an index of refraction of 1.6, a second layer 1.203 quarter wavelengths in depth with an index of refraction of 2.32 and a third layer .760 quarter wavelength in depth with an index of refraction of 1.6. This construction is at an optical thickness $\lambda$ equal to 535 nanometers for an incident angle of 0°.

The third section 16 also includes a substantially transparent aperture 30. Aperture 30 is a light valve exit window. The fourth section 18 includes a second dichroic separator 32 which is effective to reflect red light and transmit blue light of the P polarization state. It is mounted in optical alignment with the fourth beam as transmitted by the second beam splitter 24. It is mounted at a 45° angle relative to the incident beam. It has an optical thin film coating design 20 for operation in oil having an oil and index of refraction of 1.62. The coating has 15 sets of layers each set having a first layer .717 quarter wavelength in depth and having an index of refraction of 1.6, a second layer 1.15 quarter wavelengths in depth and having an index of refraction of 2.32, and a third layer .717 quarter wavelength in depth and having an index of refraction of 1.6. These layers are coated with 15 sets of layers each set having a first layer .746 quarter wavelength in depth with an index of refraction of 1.6 and a second layer 1.196 quarter wavelengths in depth with an index of refraction 2.32 and a third layer .746 quarter wavelength in depth with an index of refraction of 1.6. This construction is at an optical thickness $\lambda$ equal to 625 nanometers for an incident angle of 0°. With these coatings, the red light is effectively reflected to aperture 32, a second light valve exit window, which is at the rear surface of the fourth section 18. The blue light is transmitted to aperture 34, a third light valve exit window, which is at the top surface of the fourth section 18. Many of the above-described optical coatings were designed and performance evaluated by the Thin Film Computer Program provided as a service by the Genesee Company of Rochester, New York, U.S.A.

In operation, a high powered light source 38 and a collimating lens 40 are mounted to illuminate the surface input aperture 20 with a beam of collimated unpolarized white light 102. The light passes through the input aperture 20 and is incident on the first color selective beam splitter or prepolarizer 22 at a 45° angle. The color selective prepolarizer 22 removes the green S polarized light 104 from the system by directing it to an optical dump (not shown). While the first beam splitter 22 reflects a first green S polarized beam 104 from the system, it transmits a second beam 106 including red and blue S polarized light and red, blue and green P polarized light to the second polarizing beam splitter 24. This beam splitter is used as a main beam splitter and substantially reflects the incident P polarized light as S polarized light while transmitting the incident S polarized light as P polarized light. Thus, the red, green and blue components of the incident P polarized component of the second beam are reflected in a third beam 108 to the first (green) dichroic separator 28. The green dichroic separator 28 acts as a green filter. It substantially transmits the red and blue components 109 out of the system in much the same manner as discussed above with regard to the first polarizing beam splitter 22, while reflecting the green S polarized light 110 through the second aperture 30 to a first liquid crystal light valve 44. The liquid crystal light valve 44 modulates the polarization state of the green S polarized light in accordance with the presence of writing light from a cathode ray tube 46 in a conventional manner. The light valve returns polarization modulated light to the green dichroic separator 28 where it is reflected back to the second polarizing beam splitter 24.

As mentioned above, the second polarizing beam splitter 24 transmits a fourth beam 112 consisting essentially of red and blue P polarized light to a second dichroic separator 32. The red/blue dichroic separator 32 reflects the red light in the fourth beam as a fifth beam 114 through aperture 34 to a second liquid crystal light valve 48. The blue light is transmitted as a sixth beam 116 through aperture 36 to a third liquid crystal light valve 50. Light valves 48 and 50 modulate the polarization state of incident light in accordance with writing light provided by cathode ray tubes 52 and 54, respectively. Polarization modulated light is returned by each light valve 48 and 50 to the dichroic separator 32. The dichroic separator 32 combines the polarization modulated light from each light valve into a single beam which is transmitted to the second polarizing beam splitter 24. The second polarizing beam splitter 24 recombines the outputs of the liquid crystal light valves into a single beam 118 which is transmitted through the output aperture 26 to a conventional telecentric projection lens 56. The telecentric projection lens subsequently projects a full color image on an appropriate surface (not shown).

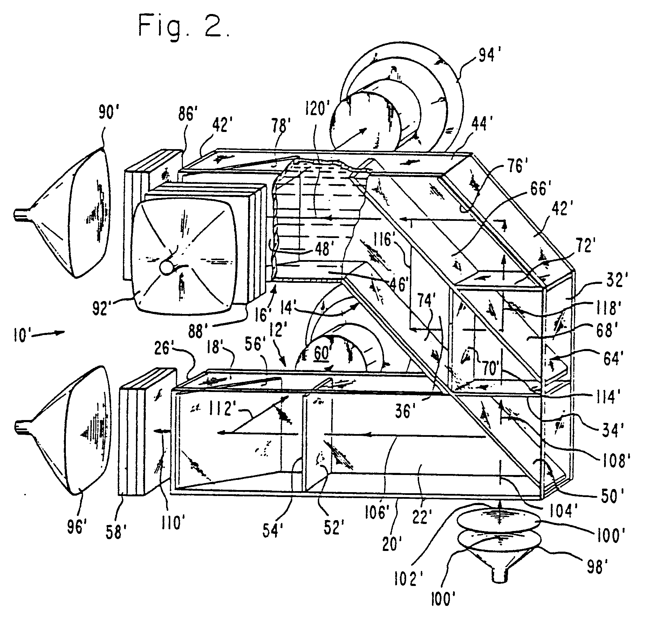

A second embodiment of the invention 10′ is shown in Figure 2 as a unitary container suitable for holding optical grade oil having a lower portion 12′, a middle portion 14′ and an upper portion 16′. As discussed more fully below, a plurality of optical components including beam splitters, mirrors and filters are mounted in fixed position within the container 10′. The particular method for mounting these components is not critical to the invention. Any number of conventional techniques including the use of grooves and posts, adhesives or premolded construction may be utilized without departing from the scope of the present invention. It is to be understood that one of these techniques is utilized here such that a detailed discussion of the mounting of the optical components is not required.

A dichroic beam splitter 50′ is mounted within the lower portion 12′ between surfaces 18′, 20′,

22' and 24' such that its transverse axis extends between surfaces 22' and 24'. The beam splitter 50' is designed to act as a blue reflector. It is contructed of glass having an index of refraction n equal to 1.52 and dimensions 3.3" × 5" × 1/8". The beam splitter 50' is mounted at a 45° angle to reflect blue S polarized light and transmit red S polarized light and green P polarized light. To achieve this performance, the beam splitter 50' is coated with ten sets of layers, each set having a first layer having a depth of .763 quarter wavelength of a material with an index of refraction of 2.05, a second layer having a depth of 1.153 quarter wavelengths of a material having an index of refraction of 1.35 and a third layer having a depth of .763 quarter wavelengths and index of refraction of 2.05. This construction is at an optical thickness λ = 385 nanometers (nm). The beam splitter 50' is immersed in oil having an index n = 1.517.

It should be noted here that cryolite has an index of refraction 1.35 and zirconium oxide has an index of refraction of 2.05. As such, these components would satisfy the above identified design criteria for the beam splitter 50'. However, other materials may be utilized without departing from the scope of the present invention. For that reason, the remaining optical components will be specified in terms of the required index of refraction and depth only. So long as these design criteria are met, the designer may select any suitable optical material.

The beam splitter 50' not only reflects the blue S component but also serves as a prepolarizer and blue filter as well. Nevertheless, even though it is not theoretically necessary, the preferred embodiment utilizes a blue filter to reject any additional non-blue stray light. The blue pass filter 52' is the first of two coatings on a plate of fused silica or glass having an index of refraction n equal 1.517 dimensions 2.9" × 2.9" × 1/8". It is mounted in the lower portion 12' of the container 10' between surfaces 18', 20', 22' and 24' such that it lies in the optical path of the reflected blue S component from beam splitter 50'.

It is coated to provide this performance with one layer of depth .731 quarter wavelength and index of refraction of 2.32 and ten sets of layers each set including one layer of depth of .5 quarter wavelength of index of refraction 2.32, one layer one quarter wavelength thick of index of refraction 1.35 and another layer one-half of one quarter wavelength of depth of index of refraction 2.32. The ten sets of layers are then topped with a final layer having a depth of .731 quarter wavelength and an index of refraction of 2.32. The construction of the filter 52' is such that the optical wavelength λ is equal to 616 nm.

The second side of the glass is coated to provide an ultraviolet filter. The ultraviolet filter 54 has a coating having a first layer of depth 1.236 quarter wavelengths and an index of refraction of 2.32. The first layer is topped with 12 sets of layers, each set having a first layer .5 quarter wavelength in depth and index of refraction of 1.46, a second layer having a depth of 1 quarter wavelength and an index of refraction of 2.32 and a third layer having a depth of .5 quarter wavelength and an index of refraction of 1.46. The 12 layers are then topped with a final layer having a thickness of 1.236 quarter wavelength and an index of refraction of 2.32.

A second polarizing beam splitter 56' is mounted in the lower portion 12' at a 48° incident angle between surfaces 18', 20', 22', 24' and 26' such that its transverse axis extends between surfaces 18' and 20'. As a result, the transverse axis of the second beam splitter 56' is normal or perpendicular to that of the first beam splitter 50'. For reasons discussed more fully below, this results in improved performance (with regard to efficiency and contrast) and a less bulky arrangement as compared to the more conventional arrangement by which the transverse axes are parallel. The beam splitter 56' is a planar rectangular plate of fused silica or glass having an index of refraction of 1.517 and dimensions 2.5" × 3.4" × 1/4". It is coated primarily to be highly transmissive to the P polarized component of the incident light. To achieve this performance, the plate of glass is coated with a first layer having a depth of 1.505 quarter wavelengths and an index of refraction of 2.05. The first layer is topped with 6 sets of layers, each set having a first layer having a depth of .909 quarter wavelength and an index of refraction of 1.35, a second layer having a depth of 1.144 quarter wavelengths and an index of refraction of 2.32 and a third layer having a depth of .909 quarter wavelength and an index of refraction of 1.35. The 6 layers are topped with a final layer of depth 1.505 quarter wavelength and an index of refraction of 2.05. The beam splitter 56' is constructed at an optical thickness λ = 350 nm.

If window apertures are utilized, it is important that the beam splitter 56' be mounted in optical alignment with the aperture for the blue liquid crystal light valve 58' and the first projection lens 60'.

A second ultraviolet filter 34' is mounted in the middle portion 14' in optical alignment with the first polarizing beam splitter 50' and in parallel with the surface 20'. The second ultraviolet filter 34' is also constructed of a plate of glass such as Schott GG—475 sharp-cut having an index of refraction n equal 1.54 nm. The filter 34' of the preferred embodiment has dimensions of 2.9" × 2.9" × 1/8". As mentioned above, it is located in the lower portion of the middle portion 14' between surfaces 18' and 28' in the optical path of the first dichroic beam splitter 50' perpendicular to the rays of incident light. It has an optical thin film coating which is effective to reflect or absorb ultraviolet light while passing light in the visible wavelengths. The coating includes a first layer having a depth of 1.49 quarter wavelengths and an index of refraction of 1.92; ten sets of layers, each set having a first layer .5 quarter wavelength in depth and an index of refraction of 1.46, a second layer 1 quarter wavelength in depth having an index of refraction of 2.32, and a third layer .5 quarter wavelength in depth and an index of refraction of 1.46. The 10 sets of layers are topped with a final layer having a depth of 1.49 quarter wavelength and an index of refraction of 1.55. This construction is at an optical thickness $\lambda = 390$ nm.

A third polarizing beam splitter 64' is disposed in the middle portion 14' and the upper portion 16' at a 48° incident angle. The third beam splitter 64' is designed to provide additional prepolarization of the light passed by the first beam splitter 50'. The beam splitter 64' includes an upper portion 66' and a lower portion 68'. Each portion is constructed of glass or fused silica such as Schott F—2 glass having an index of refraction of 1.62. The upper prepolarizer has dimensions of 3.7" × 2.9" × 1/8". The lower prepolarizer has dimensions of 3.9" × 2.9" × 1/8". The beam splitter 64' is coated on one side with a thin film coating which is effective in transmitting the P polarized component of incident light while reflecting the S polarized component of incident light. The optical thin film coating includes a first layer having a depth of 1.557 quarter wavelengths and an index of refraction of 2.05; a second layer having a depth of .994 quarter wavelength and an index of refraction of 1.35; 5 sets of layers, each set having a first layer of depth 1.157 quarter wavelengths and an index of refraction 2.32 and a second layer of depth of 1.988 quarter wavelengths and an index of refraction of 1.35; a layer of depth 1.157 quarter wavelengths and an index of refraction of 2.32, a layer of .994 quarter wavelength and an index of refraction of 1.35 and a final layer of depth 1.557 quarter wavelengths and index of refraction of 2.05. This construction is at an optical thickness $\lambda = 500$ nm.

Two filters or dichroic separators 70' and 72' are mounted within the middle portion 14' between side walls 22' and 24'. The first dichroic separator 70 is mounted so that light reflected by the beam splitter 64' is incident at a 0° angle. The second dichroic separator 72' is mounted parallel to the filter 34'. Each is mounted to lie in the optical path of the polarization components reflected or transmitted by the third beam splitter 64'. Each is constructed of glass having an index of refraction of 1.62, i.e., Schott F—2. The first separator 70' has dimension 2.9" × 2.6" × 1/8". The second separator 72' has dimensions 2.9" × 2.6" × 1.8". The first dichroic separator 70' is coated to act as a red filter for S polarized light at an incident angle of 0°. The coating consists of a first layer of depth 1.228 quarter wavelengths and index of refraction of 2.32; 13 sets of layers, each set including a first layer having a depth of .5 quarter wavelength and an index of refraction of 1.46, a second layer having a depth of 1 quarter wavelength and an index of refraction of 2.32, and a third layer having a depth of .5 quarter wavelength and an index of refraction of 1.46; and a final layer having a depth of 1.228 quarter wavelengths and an index of refraction of 2.32. The filter is constructed at an optical thickness with $\lambda$ equal to 492 nm.

The second dichroic separator 72' is designed to transmit green P polarized light. Accordingly, the coating includes a first layer having a depth of .85 quarter wavelength and an index of refraction of 2.32; 15 sets of layers, each set having a first layer of depth of .5 quarter wavelength and an index of refraction of 2.05, a second layer of 1 quarter wavelength in depth having an index of refraction of 1.6 and a third layer of depth .5 quarter wavelength and index of refraction of 2.05; and a final layer of depth .85 quarter wavelength and index of refraction of 2.32. This coating is constructed at an optical thickness $\lambda$ equal to 640 nm. Each of these filters is designed for use in oil with an index of 1.622.

A first reflector or mirror 74' is disposed in the middle portion 14' between surraces 46' and 18' and is mounted in parallel with the third beam splitter 64'. A second reflector or mirror is mounted in the upper portion 16' between surfaces 44' and 32'. It, too, is mounted in parallel with the third beam splitter 64'. The first mirror 74' has dimensions of 4.3" × 2.9" × 1/8". It is constructed of glass, i.e., Schott F—2 having an index of refraction n equal to 1.62 nm.

The second reflector or mirror 76' is the underside of surface 40' and is not shown in Figure 2. Like the first reflector 74', the upper reflector 76' is designed to be totally reflective. The upper reflector has dimensions of 3.7" × 2.9" × 1/8". It, too, is constructed of glass, i.e., Schott F—2 having an index of refraction of 1.62. No optical thin film coatings need be applied to either the upper or lower reflector 74' or 76'.

A fourth polarizing beam splitter 78' is mounted in the upper portion 16' between the top surface 44' and bottom surface 46' and front wall 22' and rear wall 24' not shown. The fourth polarizing beam splitter 78' serves as a main polarizer. It is constructed of glass, i.e., Schott F—2 having an index of refraction n equal 1.62 nm. The fourth beam splitter has dimensions 3.4" × 2.5" × 1/4".

The fourth beam splitter 78' is mounted so that its transverse axis is normal to the transverse axis of the upper prepolarizer 66'. As a result, the beam splitter and color separator plates are perpendicular to a common vertical plane in the prepolarizing section while all the plates in the main polarizer are perpendicular to horizontal plane. This results in two advantages. First, this allows the illumination light to be brought in on a vertical line from below the prepolarizers thereby reducing physical awkwardness. Second, it results in improved polarizing beam splitter performance. According to calculations, the performance improvement significantly obviated the necessity for a trim filter at the light valve and the exit windows.

The 90° twist improves performance because the performance of most currently available polarizers is such that polarization by transmission is more effective than polarization by reflection. That is the prepolarizer 64' reflects S polarized light through the red filter 70' and transmits P polarized light through the green filter 72'. Unfortunately, some P polarized light is also reflected to the red filter 70'. This means that without the 90° twist red S polarized light and green P polarized light would be delivered as the main polarizer 44'. And, since for reasons of economy, the main polarizer 78' has the same design as the prepolarizer 64'. The main polarizer 78' would similarly reflect some green P polarized light to the red light valve. This necessitates the use of a light lowering red trim filter in front of the red light valve to remove the reflected green P exacerbated by the fact that the transmission of green P polarized light to a green light valve in the off state will result in the reflection of the green P polarized light back to the main polarizer 78'. Most of this light will pass through the polarizer 78' and return to the illumination system. However, once again some green P polarized light is reflected to the red light valve by the beam splitter 78'. This light reaches the projection screen and lowers image contrast.

Since the 90° twist as the main polarizer 78' interchanges the roles of S and P polarized light, the main polarizer 78' sees green S and red P polarized light. Since there is no green P polarized light present at the main polarizer 78', no trim filter is required at the red light valve. Thus, the system is more efficient and the displayed image is brighter. In addition, no green P is projected on the screen and the displayed image has greater contrast.

To transmit red P and reflect green S polarized light, the coating on beam splitter 78' consists of a first layer having a depth of 1.557 quarter wavelengths and an index of refraction of 2.05; 6 sets of layers, each set having a first layer of depth .994 quarter wavelength and index of refraction of 1.35, a second layer having a depth of 1.157 quarter wavelengths and index of refraction of 2.32 and a third layer having a depth of .994 quarter wavelengths and index of refraction of 1.35; and a final layer having a depth of 1.557 quarter wavelength and an index of refraction of 2.05. This construction is at an optical thickness $\lambda = 500$ nm. The design specified above is for an incident angle of 48°.

In operation, the source 98' emits unpolarized light which is collimated by lens 100 and incident upon surface 20°. The incident light illuminates the first dichroic beam splitter 50' where it is separated into two beams. The first beam includes blue S polarized light and is reflected to the blue pass and ultraviolet filters 52' and 54'. The blue light is incident upon the second polarizing beam splitter 56' as P polarized light and is transmitted therethrough to the second aperture 26'. The blue P polarized light incident upon the second aperture 26 is transmitted therethrough to the first liquid crystal light valve 58'. The cathode ray tube 96' writes on the liquid crystal light valve 58' in a conventional manner such that the light valve 58' returns light to the surface 26' which is polarization modulated in accordance with writing light. The light returning to the surface 26' is transmitted on to the first polarizing beam splitter 56' whereupon it is reflected to a first projection lens 60'.

The second beam output from the first polarizing beam splitter 50' includes red and green S and P polarized light. The second beam is incident upon the third polarizing beam splitter 64' where it is split into a first beam having primarily S polarized light and a second beam having primarily P polarized light. The S polarized light is reflected onto the red filter 70' while the P polarized light is transmitted onto the green filter 72'. The red S polarized light is then reflected by mirror 74' to the upper portion 66' of the second polarizing beam splitter 64'. Similarly, the green P polarized light is reflected by second mirror 76' so that it illuminates the upper portion 66' of the polarizing beam splitter 64'. The upper portion 66' of the polarizing beam splitter 64' recombines the red S and green P beams into a single beam which illuminates the fourth polarizing beam splitter 78'. The fourth polarizing beam splitter or main prism is mounted so that its transverse axis is normal to that of the upper polarizer 66' such that light which is S polarized as to the polarizer 64' is P polarized as to the main prism 78'. Similarly, light that is P polarized as to the prepolarizer 64' is S polarized as to the main polarizer 78'. Thus, the red light is P polarized and the green light is S polarized as to the main polarizer 78'. The red P polarized light is transmitted through surface 42' to the second liquid crystal light valve 86' where it is polarization modulated in the conventional manner. Similarly, the green S polarized light is reflected to the second liquid crystal light valve 88' where it is polarization modulated in the conventional manner. The polarization modulated light is returned to the main polarizer 78' where it is recombined into a single beam and incident upon projection optics 90' in a conventional manner.

The present invention has been described with reference to particular embodiments in a particular application. It is understood that other designs of the container may be utilized without departing from the scope of the present invention. It should be noted that many of the optical components described above were designed and performance evaluated by the Thin Film Computer Program provided as a service of the Genesee Company of Rochester, New York, U.S.A. It is also understood that certain modifications can be made with regard to the selection of polarization components to be filtered by the red and green filters, respectively. In addition, other dichroic filters may be utilized without departing from the scope of the invention. As mentioned above, the prepolarizing beam splitter need not be a unitary beam splitter but may, instead, be two separate prepolarizing beam splitters. The invention of the disclosed embodiments are immersed in an optical grade oils of indices of refraction of 1.517 and 1.622. Other indices of refraction may be chosen in accordance with a particular design of the system without departing from the scope of the invention. Moreover, solid glass or fused silica may be used instead of oil. Finally, the surfaces which have been specified as being coated may be coated with any number of materials which provide the characteristics called for without departing from the scope of the invention.

**Claims**

1. A three-color image projection system comprising:

a high intensity light source (38) for providing light energy;

a system of dichroic separators (28, 32) and prepolarizing beam splitters (22, 24) for splitting and prepolarizing the light emitted from said source (38) into beams of different color and polarization states;

reflecting light valves (44, 48, 50) for selectively modulating the polarization state of each of said light beams; and

means (24) for combining the modulated light beams into a single output beam,

characterized in that the system of dichroic separators and prepolarizing beam splitters consists of

a first color selective polarizing beam splitters (22) for splitting light from said source (38) into first and second beams, said first beam (104) consisting essentially of a first color and a first polarization state and said second beam (106) consisting of second and third colors having the first polarization state and the first, second and third colors having the second polarization state;

a second color selective polarizing beam splitter (24) for splitting said second beam (106) into third and fourth beams, said third beam (108) consisting of essentially light of the first polarization state and said fourth beam (112) consisting essentially of light of the second and third colors and the second polarization state;

a first dichroic separator (28) for filtering said third beam (108), extracting said first color component and directing it to said first light valve (44); and a second dichroic separator (32) for filtering said fourth beam (112) and directing said second color component to said second light valve (48) and directing said third color component to said third light valve (48),

whereby first, second, and third substantially monochromatic polarization modulated beams are returned from said light valves (44, 48, 50) and said first and second dichroic separators (28, 32), respectively, to said second beam splitter (24) which concurrently is the means for combining the modulated beams into the single output beam.

2. The image projection system of claim 1, further characterized in that the first and second polarizing beam splitters (22, 24) have transverse axes and each is mounted so that the beam splitter transverse axes are oriented at a relative 90° angle.

3. A three-color image projection system comprising:

a high intensity light source (98') for providing light energy;

a system of dichroic separators (70', 72') and prepolarizing beam splitters (50', 56', 64') for splitting and prepolarizing the light emitted from said source (98') into beams of different color and polarization states;

reflecting light valves (58', 86', 88') for selectively modulating the polarization state of each of said light beams; and

means (78) for combining modulated light beams into a common output beam,

characterized in that the system of dichroic separators and prepolarizing beam splitters consists of

a first beam splitter (50') for splitting incident light from said source (98') into first and second beams, said first beam (106') having a first color component and said second beam (108') having second and third color components, respectively;

a second beam splitter (56') mounted in optical alignment with said first beam splitter (50') for directing light of said first color to a first light valve (58') and modulated light from said first light valve to a first projection lens (60');

a third beam splitter (64') in optical alignment with said first beam splitter (50') for splitting said second beam (108') into third and fourth beams (116', 118') having first and second polarization states, respectively;

a first dichroic filter (70') for transmitting light of the second color in the third beam (116') to provide an output beam having the second color and the first polarization state;

a second dichroic filter (72') for transmitting light of the third color in the fourth beam (118') to provide an output beam having the second polarization state and the third color;

a beam combiner (66') for combining the outputs of said first and second dichroic filters (70', 72') into a fifth beam (120'); and

a fourth beam splitter (78') for directing light in the fifth beam of the first polarization state to a second light valve (86'), light of the second polarization state to a third light valve (88') and modulated light from said second and third light valves to a second projection lens (94').

4. The image projection system of claim 3, further characterized in that the first and third beam splitters (50', 64') have parallel transverse axes relative to which the transverse axes of the second and fourth beam splitters (56', 78') are oriented at an angle of 90°.

5. A three-color image projection system according to any one of claims 1 to 4 comprising:

a high intensity light source (38) for providing light energy;

a system of dichroic separators (28, 32) and prepolarizing beam splitters (22, 24) for splitting and prepolarizing the light emitted from said source (38) into beams of different color and polarization states;

reflecting light valves (44, 48, 50) for selectively modulating the polarization state of each of said light beams; and

means (24) for combining the modulated light beams into a single output beam,

characterized in that said system of dichroic separators (28, 32) and prepolarizing beam splitters (22, 24) and also said combining means (24) are encased in a common oil-filled housing of unitary construction.

**Patentansprüche**

1. Dreifarben-Bild-Projektionssystem mit:

einer Hochintensitäts-Lichtquelle (38) zum Liefern von Lichtenergie;

einem System von Zweifarbentrennern (28, 32) und vorpolarisierenden Bündelaufspaltern (22, 24) zum Spalten und Vorpolarisieren des von der Quelle (38) ausgesendeten Lichtes in Bündel von unterschiedlicher Farbe und unterschiedlichen Polarisationszuständen;

lichtreflektierenden Röhren (44, 48, 50) zum selektiven Modulieren der Polarisierungszustände von jedem der Lichtbündel; und

Einrichtungen (24) zum Zusammenfassen der modulierten Lichtbündel zu einem einzelnen Ausgangsbündel,

dadurch gekennzeichnet, daß das System der Zweifarbentrenner und vorpolarisierenden Bündelaufspalter aufweist:

einen ersten farbenselektiven polarisierenden Bündelaufspalter (22) zum Spalten von Licht von der Quelle (38) in erste und zweite Bündel, wobei das erste Bündel (104) im wesentlichen aus einer ersten Farbe und einem ersten Polarisationszustand und das zweite Bündel (106) aus zweiten und dritten Farben mit dem ersten Polarisationszustand besteht und die erste, zweite und dritte Farbe den zweiten Polarisationszustand haben;

einen zweiten farbenselektiven polarisierenden Bündelaufspalter (24) zum Spalten des zweiten Bündels (106) in dritte und vierte Bündel, wobei das dritte Bündel (108) im wesentlichen aus Licht des ersten Polarisationszustandes und das vierte Bündel (112) im wesentlichen aus Licht der zweiten und dritten Farbe und des zweiten Polarisationszustandes besteht;

einen ersten Zweifarbentrenner (28) zum Filtern des dritten Bündels (108), Extrahieren und Lenken der ersten Farbkomponente in die erste Lichtröhre (44); und einen zweiten Zweifarbentrenner (32) zum Filtern des vierten Bündels (112) und Lenken der zweiten Farbkomponente in die zweite Lichtröhre (48) und Lenken der dritten Farbkomponente in die dritte Lichtröhre (48),

wobei erste, zweite und dritte im wesentlichen monochromatisch polarisiert modulierte Bündel von den Lichtröhren (44, 48, 50) bzw. den ersten und zweiten Zweifarbentrennern (28, 32) zu dem zweiten Bündelaufspalter (24) zurückgeworfen werden, der gleichzeitig die Einrichtung zum Zusammenfassen der modulierten Bündel in das einzelne Ausgangsbündel ist.

2. Bildprojektionssystem nach Anspruch 1, weiter dadurch gekennzeichnet, daß die ersten und zweiten polarisierende Bündelaufspalter (22, 24) transversale Achsen haben, wobei jeder so angeordnet ist, daß die Bündelaufspaltungs-Transversal-Achsen in einem relativen Winkel von 90° zueinander verlaufen.

3. Dreifarben-Bild-Projektionssystem mit:

einer Hochintensitäts-Lichtquelle (98') zum Liefern von Lichtenergie;

einem System von Zweifarbentrennern (70', 72') und vorpolarisierenden Bündelaufspaltern (50', 56', 64') zum Spalten und Vorpolarisieren des von der Quelle (98') ausgesendeten Lichtes in Bündel von unterschiedlichen Farben und Polarisationszuständen;

lichtreflektierenden Röhren (58', 86', 88') zur selektiven Modulation des Polarisationszustandes von jedem der Lichtbündel; und

Einrichtungen (78) zum Zusammenfassen der modulierten Lichtbündel in ein einzelnes Ausgangsbündel,

gekennzeichnet dadurch, daß das System der Zweifarbentrenner und vorpolarisierenden Bündelaufspaltern aufweist:

einen ersten Bündelaufspalter (50') zum Spalten des von der Quelle (98') einfallenden Lichts in erste und zweite Bündel, wobei das erste Bündel (106') eine erste Farbkomponente und das zweite Bündel (108') eine zweite bzw. dritte Farbkomponente hat;

einen zweiten Bündelaufspalter (56'), der in einer optischen Ausrichtung mit dem ersten Bündelaufspalter (50') angeordnet ist, zum Lenken des Lichts der ersten Farbe zu der ersten Lichtröhre (58') und modulierten Lichts von der ersten Lichtröhre zu einer ersten Projektionslinse (60');

einem dritten Bündelaufspalter (64'), in optischer Ausrichtung mit dem ersten Bündelaufspalter (50'), zum Spalten des zweiten Bündels (108') in dritte und vierte Bündel (116', 118'), die einen ersten bzw. einen zweiten Polarisationszustand haben;

einem ersten Zweifarbenfilter (70') zum Übertragen von Licht der zweiten Farbe in das dritte Bündel (116') um ein Ausgangsbündel bereitzustellen, das die zweite Farbe und den ersten Polarisationszustand hat;

einem zweiten Zweifarbenfilter (72') zum Übertragen von Licht der dritten Farbe in das vierte Bündel (118') um ein Ausgangsbündel bereitzustellen, das den zweiten Polarisationszustand und die dritte Farbe hat;

einen Bündelzusammenfasser (66') zum Zusammenfassen der Ausgänge des ersten und zweiten Zweifarbenfilters (70', 72') in ein fünftes Bündel (120'); und

einen vierten Bündelaufspalter (78') zum Lenken von Licht in das fünfte Bündel des ersten Polarisationszustandes zu der zweiten Lichtröhre (86'), von Licht des zweiten Polarisationszustandes zu der dritten Lichtröhre (88') und moduliertem Licht von der zweiten und dritten Lichtröhre zu einer zweiten Projektionslinse (94').

4. Bildprojektionssystem nach Anspruch 3, weiter dadurch gekennzeichnet, daß der erste und dritte Bündelaufspalter (50', 64') parallel-transversale Achsen haben, zu denen die transversale

9

Achsen des zweiten und vierten Bündelaufspalters (56′, 78′) in einem Winkel von 90° verlaufen.

5. Dreifarben-Bild-Projektionssystem nach einem der Ansprüche 1 bis 4 mit:

einer Hochintensitäts-Lichtquelle (38) zum Liefern von Lichtenergie;

einem System von Zweifarbentrennern (28, 32) und vorpolarisierenden Bündelaufspaltern (22, 24) zum Aufspalten und Vorpolarisieren des von der Quelle (38) ausgesendeten Lichts in Bündel von unterschiedlicher Farbe und unterschiedlichen Polarisationszuständen;

lichtreflektierenden Röhren (44, 48, 50) zur selektiven Modulation des Polarisationszustandes von jedem der Lichtbündel; und

Einrichtungen (24) zum Zusammenfassen der modulierten Lichtbündel in ein einzelnes Ausgangsbündel, dadurch gekennzeichnet, daß das System der Zweifarbentrenner (28, 32) und vorpolarisierenden Bündelaufspaltern (22, 24) und auch die Zusammenfassungseinrichtungen (24) gemeinsam in einem ölgefüllten Gehäuse von einheitlicher Konstruktion eingeschlossen sind.

## Revendications

1. Système de projection d'images en trois couleurs comprenant:

une source de lumière (38) à haute intensité destinée à fournir de l'énergie lumineuse;

un système de séparateurs dichroïques (28, 32) et de diviseurs optiques (22, 24) de prépolarisation destinés à diviser et prépolariser la lumière émise par ladite source (38) en faisceaux de couleurs et d'états de polarisation différents;

des modulateurs de lumière réfléchissants (44, 48, 50) destinés à moduler sélectivement l'état de polarisation de chacun desdits faisceaux lumineux; et

des moyens (24) destinés à combiner les faisceaux lumineux modulés en un faisceau unique de sortie,

caractérisé en ce que le système de séparateurs dichroïques et de diviseurs optiques de prépolarisation comprend

un premier diviseur optique (22) de polarisation sélective de couleur destiné à diviser la lumière provenant de ladite source (38) en premier et deuxième faisceaux, ledit premier faisceau (104) ayant essentiellement une première couleur et un premier état de polarisation et ledit second faisceau (106) consistant en deuxième et troisième couleurs ayant le premier état de polarisation et les première, deuxième et troisième couleurs ayant le second état de polarisation;

un second diviseur optique (24) de polarisation sélective de couleur destiné à diviser ledit deuxième faisceau (106) en troisième et quatrième faisceaux, ledit troisième faisceau (108) étant constitué essentiellement de lumière du premier état de polarisation et ledit quatrième faisceau (112) étant constitué essentiellement de lumière des deuxième et troisième couleurs et du second état de polarisation;

un premier séparateur dichroïque (28) destiné à filtrer ledit troisième faisceau (108), à extraire la composante de ladite première couleur et à la diriger sur ledit premier modulateur de lumière (44); et un second séparateur dichroïque (32) destiné à filtrer ledit quatrième faisceau (112) et à diriger la composante de ladite deuxième couleur sur ledit deuxième modulateur de lumière (48) et à diriger la composante de ladite troisième couleur sur ledit troisième modulateur de lumière (48),

les premier, deuxième et troisième faisceaux modulés, en polarisation sensiblement monochromatique, étant renvoyés desdits modulateurs de lumière (44, 48, 50) et desdits premier et second séparateurs dichroïques (28, 32), respectivement, vers ledit second diviseur optique (24) qui constitue simultanément les moyens destinés à combiner les faisceaux modulés pour former le faisceau unique de sortie.

2. Système de projection d'images selon la revendication 1, caractérisé en outre en ce que les premier et second diviseurs optiques (22, 24) de polarisation possèdent des axes transversaux et sont montés chacun de façon que les axes transversaux des diviseurs optiques forment entre eux un angle de 90°.

3. Système de projection d'images en trois couleurs, comprenant:

une source de lumière (98′) à haute intensité destinée à fournir de l'énergie lumineuse;

un système dé séparateurs dichroïques (70′, 72′) et de diviseurs optiques (50′, 56′, 64′) de prépolarisation destiné à diviser et prépolariser la lumière émise par ladite source (98′) en faisceaux de couleurs et d'états de polarisation différents;

des modulateurs de lumière réfléchissants (58′, 86′, 88′) destinés à moduler sélectivement l'état de polarisation de chacun desdits faisceaux lumineux; et

des moyens (78) destinés à combiner les faisceaux lumineux modulés en un faisceau commun de sortie,

caractérisé en ce que le système de séparateurs dichroïques et de diviseurs optiques de prépolarisation comprend

un premier diviseur optique (50′) destiné à diviser la lumière incidente provenant de ladite source (98′) en premier et deuxième faisceaux, ledit premier faisceau (106′) ayant une première composante de couleur et ledit deuxième faisceau (108′) ayant des deuxième et troisième composantes de couleur, respectivement;

un deuxième diviseur optique (56′) monté en alignement optique avec ledit premier diviseur optique (50′) afin de diriger la lumière de ladite première couleur sur un premier modulateur de lumière (58′) et la lumière modulée, provenant dudit premier modulateur de lumière, sur une première lentille (60′) de projection;

un troisième diviseur optique (64′) en alignement optique avec ledit premier diviser optique (50′) afin de diviser ledit deuxième faisceau (108′) en troisième et quatrième faisceau (116′, 118′) ayant des premier et second états de polarisation, respectivement;

un premier filtre dichroïque (70′) destiné à transmettre la lumière de la deuxième couleur dans le troisième faisceau (116') pour produire un faisceau de sortie ayant la deuxième couleur et le premier état de polarisation;

un second filtre dichroïque (72') destiné à transmettre la lumière de la troisième couleur dans le quatrième faisceau (118') pour produire un faisceau de sortie ayant le second état de polarisation et la troisième couleur;

un élément (66') de combinaison de faisceaux destiné à combiner les sorties desdits premier et second filtres dichroïques (70', 72') en un cinquième faisceau (120'); et

un quatrième diviseur optique (78') destiné à diriger la lumière présente dans le cinquième faisceau, ayant le premier état de polarisation, sur un deuxième modulateur de lumière (86'), la lumière ayant le second état de polarisation sur un troisième modulateur de lumière (88') et la lumière modulée provenant desdits deuxième et troisième modulateurs de lumière sur une seconde lentille (94') de projection.

4. Système de projection d'images selon la revendication 3, caractérisé en outre en ce que les premier et troisième diviseurs optiques (50', 64') possèdent des axes transversaux parallèles par rapport auxquels les axes transversaux des deuxième et quatrième diviseurs optiques (56', 78') sont orientés sous un angle de 90°.

5. Système de projection d'images en trois couleurs selon l'une quelconque des revendications 1 à 4, comprenant:

une source (38) de lumière à haute intensité destinée à fournir de l'énergie lumineuse;

un système de séparateurs dichroïques (28, 32) et de diviseurs optiques (22, 24) de prépolarisation destinés à diviser et prépolariser la lumière émise par ladite source (38) en faisceaux de couleurs et d'états de polarisation différents;

des modulateurs de lumière réfléchissants (44, 48, 50) destinés à moduler sélectivement l'état de polarisation de chacun desdits faisceaux lumineux; et

des moyens (24) destinés à combiner les faisceaux lumineux modulés en un faisceau unique de sortie,

caractérisé en ce que ledit système de séparateurs dichroïques (28, 32) et de diviseurs optiques (22, 24) de prépolarisation, ainsi que lesdits moyens de combinaison (24), sont enfermés dans un boîtier commun rempli d'huile, réalisé d'une seule pièce.

Fig. 1.

0 083 090

Fig. 2.

2